# EUROPEAN PATENT APPLICATION

(11) **EP 1 036 835 A2**
(43) Date of publication of application: **20.09.2000**
(21) Application number: 00301843.9
(22) Date of filing: 07.03.2000
(51) Int. Cl.: C09D 133/06, B05D 7/00

(54) **The use of polymers as coatings on substrates**

(30) Priority: 18.03.1999 US 124946
(71) Applicant: ROHM AND HAAS COMPANY, Philadelphia, Pennsylvania 19106-2399 (US)
(72) Inventor: Elfring, William Henry, jr., Philadephia, Pennsylvania 19119 (US); Kelly, David Goodro, Ambler, Pennsylvania 19002 (US); Lau, Willie, Ambler, Pennsylvania 19002 (US)
(74) Representative: Buckley, Guy Julian

(57) **Abstract**

A method of coating substrates is disclosed. The method utilizes a polymer containing a hydrophobic monomer to provide coatings with good adhesion to hydrophobic, cement based, and metal based substrates.

The polymer comprises as polymerized units: a) from 1 to 100 parts by weight of at least one C₁₂ to C₄₀alkyl ester of (meth)acrylic acid, b) from 0 to 99 parts by weight of at least one ethylenically unsaturated monomer, and c) from 0 to 15 parts by weight of at least one ethylenically unsaturated acid containing monomer or salts thereof.

## Description

This invention relates to the use of polymers as coatings on substrates, in particluar to the use of polymers as coatings on cement based and metal based substrates, or hydrophobic ceiling, wall, molded article, and roofing substrates.

Structures frequently are finished with a layer of a hydrophobic substrate to repel water. The hydrophobic substrate may be made of vinyl, thermoplastic polyolefins such as polypropylene, chlorinated polysulfonate, ethylene/propylene diene monomer ("EPDM"), or similar materials. There are several problems associated with these hydrophobic substrates.

The first problem is that the layer of the hydrophobic substrate used may be black. As a result of the layer of the hydrophobic substrate being black, the hydrophobic substrate tends to absorb tremendous amounts of heat from solar radiation. The heat is then transferred into the structure, resulting in either increased cost to cool the structure, or a hot structure. The sunlight and heat may also lead to deterioration of the hydrophobic substrate. In order to overcome this problem, it is desirable to apply a coating to the hydrophobic substrate to act as a solar reflector.

Another problem associated with hydrophobic substrates is that many of the coatings that will adhere to the substrate are solvent based. There are environmental concerns over volatile organic compounds ("VOCs") which are emitted from solvent based coatings. Therefore, aqueous coatings are preferred. By aqueous is meant water based and free of VOCs.

A third problem associated with hydrophobic substrates is that aqueous coatings typically do not adhere well to the hydrophobic substrates. Therefore, there is a need for a method of coating hydrophobic substrates with an aqueous coating containing a polymer that adheres well to the hydrophobic substrates.

One attempt to improve adhesion to unpretreated plastics was disclosed in German Patent Application Number DE 19538147. A polymeric coating containing copolymers of butyl methacrylate, methyl methacrylate, cyclohexyl methacrylate, and methacrylic acid with 1-hexene-propylene copolymers was taught to have good adhesion to unpretreated plastic. The polymer was made in organic solvent and was water-thinnable. Despite this disclosure, there remains a need for a method of coating hydrophobic substrates with an aqueous coating containing a polymer that adheres well to the hydrophobic substrates.

We have found that the use of an aqueous coating containing a polymer which contains as polymerized units a hydrophobically modified monomer, as a coating for hydrophobic substrates meets this need. By hydrophobically modified monomer is meant a C₁₂ to C₄₀ alkyl ester of (meth)acrylic acid.

The present invention provides a method of coating substrates including: applying an aqueous coating containing a polymer to the substrate wherein the polymer comprises as polymerized units: a) from 1 to 100 parts by weight of at least one C₁₂ to C₄₀ alkyl ester of (meth)acrylic acid, b) from 0 to 99 parts by weight of at least one ethylenically unsaturated monomer, and c) from 0 to 15 parts by weight of at least one ethylenically unsaturated acid containing monomer or salts thereof, wherein the substrate is selected from vinyl, thermoplastic polyolefins, chlorinated polysulfonate, ethylene/propylene diene monomer, cement based and metal based substrates.

The polymer used in this invention may be prepared by a single stage or multi-stage process. The process may be an emulsion polymerization. See U.S. Pat. No. 5,521,266 for a detailed description of emulsion polymerization processes. The process may also be solution polymerization followed by emulsification. See U.S. Pat. No. 5,539,021 for detailed descriptions of a solution polymerization followed by mini-emulsion polymerization or micro-emulsion polymerizations. The emulsion polymerization process of U.S. Pat. No. 5,521,266 is preferred.

The morphology of the polymer utilized in this invention may be designed to optimize certain properties of the polymer. For example, the polymer may be made in a core-shell morphology wherein the core polymer is designed to have a lower glass transition temperature than the polymer that creates the shell. Alternatively, the polymer that makes up the core may be designed to have a higher glass transition temperature than the polymer that makes up the shell. In this case, the core may act as a filler and the shell may bind the harder cores together to aid in film formation. The core-shell polymers may be prepared by methods well known in the art.

In the process utilized for preparing the samples within this application, a first stage was prepared by adding a monomer emulsion and sodium persulfate to a solution containing methyl-β-cyclodextrin ("CD"), deionized water, and surfactant. The first stage was reacted at 85°C. A second stage was prepared by making a second monomer emulsion and feeding the second monomer emulsion and a sodium persulfate solution to the reacted first stage. The second stage was reacted at 85°C.

The polymer used in this invention contains as polymerized units from 1 to 100 parts by weight, preferably from 20 to 95 parts by weight, more preferably 40 to 95 parts by weight of at least one C₁₂ to C₄₀ alkyl ester of (meth)acrylic acid. It is further preferred that the polymer used in this invention contains as polymerized units from 60 to 95 parts by weight, preferably 70 to 94 parts by weight, more preferably 80 to 93 parts by weight of at least one C₁₂ to C₄₀ alkyl ester of (meth)acrylic acid. It is preferred that the alkyl ester of (meth)acrylic acid be a C₁₂ to C₃₀ alkyl ester of (meth)acrylic acid. It is more preferred that the alkyl ester of (meth)acrylic acid be a C₁₂ to C₁₈ alkyl ester of (meth)acrylic acid. Suitable alkyl esters of (meth)acrylic acid include, but are not limited to lauryl (meth)acrylate, cetyl (meth)acrylate, stearyl (meth)acrylate, behenyl (meth)acrylate, and eicosyl (meth)acrylate. Beneficial properties may be obtained by utilizing more than one C₁₂ to C₄₀ alkyl ester of (meth)acrylic acid. By (meth)acrylic acid is meant acrylic acid or methacrylic acid.

The polymer used in this invention may also contain as polymerized units from 0 to 99 parts by weight, preferably 4 to 79 parts by weight, more preferably 4 to 59 parts by weight of at least one ethylenically unsaturated monomer. It is further preferred that the polymer used in this invention contains as polymerized units from 4 to 39 parts by weight, preferably 5 to 29 parts by weight, more preferably 6 to 19 parts by weight of at least one ethylenically unsaturated monomer. Suitable ethylenically unsaturated monomers for use in the preparation of the polymer compositions of this invention include, but are not limited to (meth)acrylic ester monomers including methyl acrylate, ethyl acrylate, butyl acrylate, 2-ethylhexyl acrylate, decyl acrylate, methyl methacrylate, butyl methacrylate, hydroxyethyl methacrylate, and hydroxypropyl acrylate; acrylamide or substituted acrylamides; styrene or substituted styrene; vinyl acetate or other vinyl esters; vinyl monomers such as vinyl chloride, vinylidene chloride, N-vinyl pyrolidone; and acrylonitrile or methacrylonitrile. Butyl acrylate, methyl methacrylate, and styrene are preferred.

The polymer used in this invention may also contain as polymerized units from 0 to 15 parts by weight, preferably 1 to 10 parts by weight, more preferably 1 to 5 parts by weight ethylenically unsaturated acid containing monomer or salts thereof. Suitable ethylenically unsaturated acid containing monomers include, but are not limited to acrylic acid, methacrylic acid, crotonic acid, phosphoethyl methacrylate, 2-acrylamido-2-methyl-1-propanesulfonic acid, sodium vinyl sulfonate, itaconic acid, fumaric acid, maleic acid, monomethyl itaconate, monomethyl fumarate, monobutyl fumarate, and maleic anhydride. Acrylic acid and methacrylic acid are preferred. Methacrylic acid is more preferred.

The polymer used in this invention may also contain as polymerized units from 0 to 25 parts by weight, preferably 0 to 15 parts by weight, more preferably 0 to 10 parts by weight of a fluorinated (meth)acrylate ethylenically unsaturated monomer, such as Zonyl™ products (Trademark of DuPont Chemical Company).

The polymer used in this invention may also contain as polymerized units from 0 to 25 parts by weight, preferably 0 to 15 parts by weight, more preferably 0 to 10 parts by weight of a silicone containing ethylenically unsaturated monomer, such as vinyl trimethoxy silane and methacryloxy propyl trimethoxy silane.

The polymer used in this invention may also contain as polymerized units from 0 to 80 parts by weight, preferably 0 to 50 parts by weight, more preferably 1 to 15 parts by weight of a monomer selected from C₆-C₂₀ alkyl styrene and alkyl-alpha-methyl styrene, C₆-C₂₀ alkyl dialkyl itaconate, C₁₀-C₂₀ vinyl esters of carboxylic acids, C₈-C₂₀ N-alkyl acrylamide and methacrylamide, C₁₀-C₂₀ alkyl alpha-hydroxymethylacrylate, C₈-C₂₀ dialkyl 2,2'-(oxydimethylene) diacrylate, C₈-C₂₀ dialkyl 2,2'-(alkyliminodimethylene)diacrylate, C₈-C₂₀ N-alkylacrylimide, and C₁₀-C₂₀ alkyl vinylether.

The polymer used in this invention may also contain as polymerized units from 0.1 to 10 parts by weight, preferably 0.1 to 5 parts by weight, more preferably 0.1 to 3 parts by weight, based on the polymer weight of a cross-linker selected from a cross-linking agent and a cross-linking monomer. By cross-linker is meant a compound which has at least 2 reactive groups which will react with acid groups found on the monomers of the compositions of this invention. Cross-linking agents useful in this invention include a polyaziridine, polyisocyanate, polycarbodiimide, polyamine, and a polyvalent metal. The cross-linking agent is optional, and may be added after polymerization has been completed.

Cross-linking monomers are cross-linkers which are incorporated with the monomers of the compositions of this invention during polymerization. Cross-linking monomers useful in this invention include acetoacetate-functional monomers such as acetoacetoxyethyl acrylate, acetoacetoxypropyl methacrylate, acetoacetoxyethyl methacrylate, allyl acetoacetate, acetoacetoxybutyl methacrylate, and 2,3-di(acetoacetoxy)propyl methacrylate; divinyl benzene, (meth)acryloyl polyesters of polyhydroxylated compounds, divinyl esters of polycarboxylic acids, diallyl esters of polycarboxylic acids, diallyl dimethyl ammonium chloride, triallyl terephthalate, methylene bis acrylamide, diallyl maleate, diallyl fumarate, hexamethylene bis maleamide, triallyl phosphate, trivinyl trimellitate, divinyl adipate, glyceryl trimethacrylate, diallyl succinate, divinyl ether, the divinyl ethers of ethylene glycol or diethylene glycol diacrylate, polyethylene glycol diacrylates or methacrylates, 1,6-hexanediol diacrylate, pentaerythritol triacrylate or tetraacrylate, neopentyl glycol diacrylate, cyclopentadiene diacrylate, the butylene glycol diacrylates or dimethacrylates, trimethylolpropane di- or tri-acrylates, (meth)acrylamide, n-methylol (meth)acrylamide, mixtures thereof, and the like. (Meth)acrylamide, n-methylol (meth)acrylanuide, and mixtures thereof are preferred. The amount of cross-linker utilized is chosen such that the cross-linker does not interfere with film formation.

Chain transfer agents may be used to control the molecular weight of the polymers used in this invention. Suitable chain transfer agents include mercaptans, such as, for example, dodecylmercaptan ("n-DDM"). The chain transfer agent may be used at from 0.1% to 10% based on the total weight of the polymeric composition.

The aqueous coating containing the polymer used in this invention may be applied by itself to serve as a tie coat for hydrophobic substrates. The tie coat is a base coat or primer which adheres to the hydrophobic substrate and provides a base for other coatings which would not adhere well to the hydrophobic substrate to be applied.

When used on roofing, coatings made from the polymers used in this invention should reflect solar radiation or protect the substrate from the effects of solar radiation. Pigments, fillers or combinations thereof generally are used with the polymers used in this invention for this reason, however the polymer may be used by itself and further coated with a pigmented and filled coating. The pigments or fillers used will be light in color when the purpose is to reflect solar radiation and are well known in the art. Pigments to color and protect the substrate from the effects of solar radiation without being high in reflectance are also well known in the art.

The amount of pigment used may range from 10 to 60 parts by weight. Alternatively, other reflective, scattering, or absorptive materials such as glass, ceramic or polymeric hollow spheres, opaque polymers, hard polymers, or metals may be added to the aqueous coating containing the polymer used in this invention.

The polymer used in this invention is typically used to coat substrates by applying the polymer to the substrate. The substrate may be selected from cement based substrates or metal based substrates, or hydrophobic substrates such as vinyl, thermoplastic polyolefins such as polyethylene and polypropylene, chlorinated polysulfonate, EPDM, or similar materials. The substrate may be a ceiling, wall, molded article, or a roof.

The polymer may be applied to the substrate by roll, spray, or brush, or by dipping the substrate in the polymer. Other coating methods known in the art may also be utilized. The polymer may be applied at from 1g/m² to 200g/m², preferably 5g/m² to 125g/m² to yield a dry thickness of from 1 micron to 200 microns, preferably 5 microns to 125 microns. If the polymer is applied in a pigmented formulation, then the coating thicknesses will range from 100 microns to 1000 microns, and will preferably be greater than 200 microns.

The polymer is then dried. The polymer may be dried under ambient conditions. Forced air may also be utilized to aid in the drying of the polymer. Heat may also be utilized in the drying of the polymer. The forced air may be heated, or the polymer coated substrate may be placed in a heated oven. The temperature of the heat may range from 35°C to 200°C. Other methods of drying known in the art such as the use of ultra violet or infra red, or an electrically heated bar may also be utilized.

The polymer may also be admixed with latexes prior to applying the polymer to the substrate. Any latex may be used. Suitable latexes include, but are not limited to butyl acrylate/methyl methacrylate, butyl acrylate/styrene, styrene/butadiene, and vinyl acetate latexes. The amount of polymer admixed with the latex is typically from 1 to 50 parts by weight, preferably 5 to 45 parts by weight, more preferably 10 to 40 parts by weight. The admixture is typically applied to substrates as described above.

The following abbreviations are used throughout this patent application: LMA = lauryl methacrylate SMA = stearyl methacrylate St = styrene MMA = methyl methacrylate BA = butyl acrylate MAA = methacrylic acid CD = methyl-β-cyclodextrin LA = lauryl acrylate CEMA = cetyl-eicosyl methacrylate n-DDM = n-dodecyl mercaptan

The following Examples are intended to demonstrate the polymers that are useful in this invention and the benefits obtained when using the polymers as coatings on substrates. The Examples should not be construed as limiting the scope of the invention.

Two different types of emulsion polymers were tested. The general procedure was as follows: for stage 1, 400 g deionized water, Triton® XN-45S (Trademark of Union Carbide Chemical Company) anionic surfactant, and 28.6 g CD were introduced into a 4-liter round bottom flask with four necks equipped with a mechanical stirrer, temperature control device, condenser, monomer and initiator feed lines, and a nitrogen inlet at room temperature. The contents were heated to 85°C while stirred under a nitrogen purge. A monomer emulsion was prepared separately. Solutions of 0.35% by weight sodium carbonate (based on the total monomer weight in stage 1 and stage 2) in 25 g deionized water and 0.35% by weight sodium persulfate (based on the total monomer weight in stage 1 and stage 2) in 30 g deionized water were introduced into the reaction kettle. The monomer emulsion was fed over a period of 20 minutes together with an initiator solution of 0.05% sodium persulfate (based on the total monomer weight in stage 1 and stage 2) in 210 g deionized water.

For stage 2, a second monomer emulsion was prepared using 625 g deionized water, 7.8 g Triton® XN-45S anionic surfactant, and monomers. Immediately after the end of the stage 1 monomer emulsion feed, the stage 2 monomer emulsion was fed over a period of 3 hours together with the sodium persulfate initiator solution. The monomers of the first and second monomer emulsions were selected such that the polymers of Table 1 (based on weight percent monomer) were obtained. The list of different polymers includes polymers with and without n-DDM. The use of n-DDM lowers the molecular weight (from about 500,000 to about 150,000), so comparisons between adhesion with and without n-DDM is not appropriate.

**Table 1**

| Polymer | T_{g} (°C) | Tₘ (°C) | Composition |
|---|---|---|---|
| 1 | 3 | NA | 60BA/39MMA/1MAA |
| 2 | 2 | NA | 40CEMA/20BA/39MMA/1MAA |
| 3 | -29 | NA | 40CEMA/40BA/19MMA/1MAA |
| 4 | 5 | NA | 40SMA/20BA/39MMA/1MAA |
| 5 | -29 | NA | 40SMA/40BA/19MMA/1MAA |
| 6 | NA | -1 | 46SMA/47LMA/5MMA/2MAA |
| 7 | NA | -16 | 25SMA/68LMA/5MMA/2MAA |
| 8** | -13 | NA | 70BA/28.4MMA/1.6MAA |
| 9** | 6 | NA | 72LMA/26.4MMA/1.6MAA |
| 10** | -4 | NA | 62LMA/36.4Sty/1.6MAA |
| 11** | -13 | NA | 58LA/40.4MMA/1.6MAA |
| 12** | -11 | NA | 54LA/44.4MMA/1.6MAA |
| 13** | -7 | NA | 40LMA/27BA/31.4MMA/1.6MAA |
| 14 | NA | 26 | 93SMA/5MMA/2MAA |
| 15 | NA | NA | 50BA/MMA* /50 Sample 14 |
| 16 | NA | NA | 50BA/MMA* /50 Sample 6 |
| NA = not analyzed | | | |

| | | | |
|---|---|---|---|
| * = 65% BA / 34% MMA / 1% MAA | | | |
| ** = samples prepared with 0.3 weight percent n-DDM | | | |

Samples 8 - 13 were prepared without the first stage described above, but a polymer seed of butyl acrylate and methyl methacrylate was substituted for stage 1.

The polymers were tested for adhesion to EPDM in two ways. First, the latex polymer was applied neat to the EPDM substrate and allowed to cure (clear coats). This provides a measure of the potential performance as a tiecoat on EPDM. Second, the latex polymer was used as a binder in formulating a pigmented coating (Table 2).

The materials used in the pigmented coatings and sources are as follows:

| | |
|---|---|
| Tamol® 165A | Rohm and Haas Company |
| Skane M-8 | Rohm and Haas Company |
| Acrysol® RM-8W | Rohm and Haas Company |
| Acrysol® RM-2020 NPR | Rohm and Haas Company |

**Table 2**

| Material | Amount (kg) |
|---|---|
| water | 49.4 |
| dispersant (Tamol® 165A) | 2.5 |
| defoamer | 1.3 |
| aqueous ammonia | 1.3 |
| calcium carbonate | 173.6 |
| titanium dioxide | 27.6 |
| water | 36.0 |
| Experimental Binder (55%) | 216.7 |
| mildewcide (Skane M-8) | 1.3 |
| defoamer | 1.3 |
| thickener 1 (Acrysol® RM-8W) | 0.4 |
| thickener 2 (Acrysol® RM-2020 NPR) | 1.3 |
| total | 515.3 |
| weight solids | 63.0 |
| volume solids | 48.5 |

Both types of coatings were applied on 7.6 cm x 15.2 cm EPDM panels, with 20 g of total material. A 2.54 cm x 15 cm piece of polyester cotton fabric was applied to each sample. The test panels were dried for 3 weeks at 75°F and 50% RH. Peel adhesion is the force per unit width required to break the bond between an adhesive and a surface when peeled back at a controlled angle at a standard rate and condition. The samples prepared above were subjected to the peel adhesion test at 180° using a tensile tester pulling at 5 cm per minute and measuring average load. The results are shown in Table 3.

**Table 3**

| | Wet Adhesive Strength (N/m) | |
|---|---|---|
| Polymer | Clear | Pigmented |
| 1 | 50 | NT |
| 2 | 320 | 50 |
| 3 | 320 | 120 |
| 4 | 100 | 40 |
| 5 | 380 | 140 |
| 6 | 680 | 140 |
| 7 | 680 | 70 |
| 8 | 880 | 80 |
| 9 | 190 | 50 |
| 10 | 510 | 120 |
| 11 | 120 | 50 |
| 12 | 680 | 140 |
| 13 | 180 | 50 |
| 14 | NT | 180 |
| 15 | NT | 30 |
| 16 | NT | 30 |
| NT = not tested | | |

The data above demonstrates that tiecoats that could be made from polymers used in this invention adhere well to EPDM. The hydrophobic monomer content of the polymer has a direct effect on the adhesion to EPDM as shown by the results on clear coatings. Complicating the interpretation of these results is the effect of T_{g} (or Tₘ for the crystalline SMA/LMA copolymers). Both the SMA/BA and CEMA/BA copolymers with Tg > 0°C have wet adhesive strength slightly above the BA/MMA control (which also has T_{g} > 0°C). However, when the T_{g} is lowered to -28°C, the SMA/BA and CEMA/BA copolymers have much greater adhesion than the BA/MMA control. The results with both crystalline copolymers of SMA/LMA (with Tₘ of -1° and -16°C) show that the hydrophobic monomer content improves adhesion (wet adhesive strength of 660 N/m versus 50 N/m for BA/MMA).

The effect of the hydrophobic monomer content for high molecular weight polymers in pigmented coatings on wet adhesion to EPDM follows the same trend as the clear coats. In general, as expected, the wet adhesion was less with pigmented coatings than clear coatings.

### The Effect of Hydrophobic Monomer Content on Low MW Binder Performance

While the lower MW of the polymer does improve the wet adhesive strength somewhat, especially in clear coatings, improvements in adhesion with pigmented coatings are due mostly to the hydrophobic content of the polymer. As can be seen in Table 3, when the binders are pigmented into a coating formulation, it is noted that increased hydrophobicity increases the wet adhesion of both the low MW and high MW polymers. It is not just the content of long chain (meth)acrylate that improves adhesion, but the presence of styrene with long chain (meth)acrylate provides the best adhesion in these examples. Comparing the wet adhesion of LMA/Sty and LA/Sty versus LMA/MMA and LA/MMA shows the improvement that styrene makes in increasing the hydrophobicity of the coating. Without the additional hydrophobic styrene the MMA versions are no better than the BA/MMA control.

### Adhesion To High Density Polyethylene (HDPE)

A second set of polymers was prepared as described above to test the adhesion of the polymers to HDPE. The polymer compositions are listed in Table 4. The polymers were cast on HDPE with a 0.00 1 mil bird applicator. The samples were dried for 5 minutes at 82°C, then subjected to the typical 180° peel adhesion test using a tensile tester. The results are shown in Table 5.

**Table 4**

| Polymer | Composition | Tg | Tm |
|---|---|---|---|
| 17 | 80 BA/19 MMA/1 MAA | -24.5 | |
| 18 | 94BA/5 MMA/1 MAA/0.5 nDDM | -41.2 | |
| 19 | 25 SMA/68 LMA/5 MMA/2 MAA/0.5 nDDM | | -16.7 |
| 20 | 25 SMA/69 LMA/5 MMA/1 MAA/0.5 nDDM | | -18.2 |
| 21 | 35 LMA/32 BA/31.4 MMA/1.6 MAA/0.5 nDDM | -7.8 | |
| Tg and Tm are in °C | | | |

**Table 5**

| Polymer | 180°Peel (N/m) |
|---|---|
| 17 | 0.13 ss |
| 18 | 0.94 C |
| 19 | 1.85 C |
| 20 | 1.52 C |
| 21 | 0.09 ss |

| | |
|---|---|
| C = cohesive failure | |
| ss = slipstick | |

The data above demonstrates that at low Tg, low melting point (Tm), or low molecular weight, the polymers used in this invention adhere well to HDPE.

### Elastomeric Roof And Wall Coatings

In addition to coating hydrophobic substrates, some of the polymers utilized in this invention are useful in elastomeric formulations to coat cement based and metal based roof and wall substrates. A distinct property of elastomeric coatings is their flexibility at low temperature. This allows for substrate movement during building heating and cooling cycles, without causing failure to the coating. Most of the polymers containing hydrophobic monomers tested show the same result as most elastomeric coating binders; the low temperature flexibility is directly related to the T_{g}, and the lowest temperature flexibility is close to the polymer T_{g}. However, when studying the crystalline polymers it was found that the flexibility temperature was not close to the Tₘ, but about 18°C lower.

Polymer samples were prepared to demonstrate the usefulness of this invention in elastomeric wall coatings. Polymers were prepared as indicated in Table 6.

**Table 6**

| Polymer | Composition |
|---|---|
| 22 | 80BA/19MMA/1MAA |
| 23 | 50LMA/10BA/19MMA/1MAA |

The polymers were formulated into typical coatings at a pigment volume concentration of 40 and a volume solids of 41. The coatings were prepared as free films and on aluminum panels. The coatings were dried, and tested by ASTM methods for water resistance, flexibility, and tensile strength. Dirt resistance was tested by measuring the diffuse reflectance compared to a laboratory standard before and after a labarotory dirt pick up test. The results are shown in Table 7.

**Table 7**

| | Polymer 22 | Polymer 23 |
|---|---|---|
| DIRT RESISTANCE | | |
| % Reflectance Retained | 96 | 99 |

| WATER RESISTANCE | | |
|---|---|---|
| Water Swelling | | |
| Maximum Wt. Gain (%) | 22 | 19 |

| MECHANICAL PROPERTIES | | |
|---|---|---|
| Low Temperature | | |
| Flexibility at -34°C | | |
| 1/2 inch Mandrel Bend | Pass | Pass |
| 1/8 inch Mandrel Bend | Pass | Pass |

| Tensile Properties | | |
|---|---|---|
| Tensile Strength (MPa) | | |
| -18°C | | |
| Maximum | 6.48 | 8.96 |
| Break | 5.79 | 7.03 |

| 0°C | | |
|---|---|---|
| Maximum | 2.38 | 3.14 |
| Break | 1.69 | 2.86 |

| 24°C | | |
|---|---|---|
| Maximum | 0.97 | 1.07 |
| Break | 0.79 | 0.79 |

| 40°C | | |
|---|---|---|
| Maximum | 0.88 | 0.80 |
| Break | 0.74 | 0.62 |

| Elongation (%) | | |
|---|---|---|
| -18°C | | |
| at Maximum Stress | 70 | 48 |
| at Break | 185 | 90 |

| 0°C | | |
|---|---|---|
| at Maximum Stress | 160 | 125 |
| at Break | 565 | 290 |

| 24°C | | |
|---|---|---|
| at Maximum Stress | 193 | 220 |
| at Break | 297 | 450 |

| 40°C | | |
|---|---|---|
| at Maximum Stress | 150 | 195 |
| at Break | 210 | 307 |

The data above demonstrates that the polymers useful in this invention perform well as elastomeric roof and wall coatings.

## Claims

1. A method of coating substrates comprising:
applying an aqueous coating containing a polymer to the substrate wherein the polymer comprises as polymerized units: a) from 1 to 100 parts by weight of at least one C₁₂ to C₄₀ alkyl ester of (meth)acrylic acid, b) from 0 to 99 parts by weight of at least one ethylenically unsaturated monomer, and c) from 0 to 15 parts by weight of at least one ethylenically unsaturated acid containing monomer or salts thereof, wherein the substrate is selected from vinyl, thermoplastic polyolefins, chlorinated polysulfonate, ethylene/propylene diene monomer, cement based and metal based substrates.

2. The method according to Claim 1 wherein the polymer comprises as polymerized units: a) from 20 to 95 parts by weight of at least one C₁₂ to C₄₀ alkyl ester of (meth)acrylic acid, b) from 4 to 79 parts by weight of at least one ethylenically unsaturated monomer, and c) from 1 to 10 parts by weight of at least one ethylenically unsaturated acid containing monomer or salts thereof.

3. The method according to Claim 1 wherein the polymer comprises as polymerized units: a) from 40 to 95 parts by weight of at least one C₁₂ to C₄₀ alkyl ester of (meth)acrylic acid, b) from 4 to 59 parts by weight of at least one ethylenically unsaturated monomer, and c) from 1 to 5 parts by weight of at least one ethylenically unsaturated acid containing monomer or salts thereof.

4. The method according to Claim 1 wherein the polymer further comprises a cross-linker.

5. The method according to Claim 1 wherein the polymer is admixed with from 50 to 99 parts by weight of a latex and the admixture is applied to a hydrophobic substrate.

6. The method according to Claim 5 wherein the polymer comprises as polymerized units: a) from 20 to 95 parts by weight of at least one C₁₂ to C₄₀ alkyl ester of (meth)acrylic acid, b) from 4 to 79 parts by weight of at least one ethylenically unsaturated monomer, and c) from 1 to 10 parts by weight of at least one ethylenically unsaturated acid containing monomer or salts thereof.

7. The method according to Claim 5 wherein the polymer comprises as polymerized units: a) from 40 to 95 parts by weight of at least one C₁₂ to C₄₀ alkyl ester of (meth)acrylic acid, b) from 4 to 59 parts by weight of at least one ethylenically unsaturated monomer, and c) from 1 to 5 parts by weight of at least one ethylenically unsaturated acid containing monomer or salts thereof.

8. The method according to Claim 5 wherein the polymer further comprises a cross-linker.

9. The method according to Claim 5 wherein the latex is selected from the group consisting of butyl acrylate/methyl methacrylate, butyl acrylate/styrene, styrene/butadiene, and vinyl acetate latexes.
